# EUROPÄISCHE PATENTANMELDUNG

(11) **EP 4 755 596 A1**
(43) Veröffentlichungstag der Anmeldung: **10.06.2026**
(21) Anmeldenummer: 25219924.5
(22) Anmeldetag: 02.12.2025
(51) Int. Cl.: B25J 17/02

(54) **AUSGLEICHSVORRICHTUNG, SYSTEM MIT HANDHABUNGSVORRICHTUNG UND MIT AUSGLEICHSVORRICHTUNG, VERFAHREN ZUM STEUERN EINER HANDHABUNGSVORRICHTUNG SOWIE EINER AUSGLEICHSVORRICHTUNG**

(30) Priorität: 05.12.2024 DE 102024136297
(71) Anmelder: SCHUNK SE & Co. KG Spanntechnik Greiftechnik Automatisierungstechnik, 74348 Lauffen am Neckar (DE)
(72) Erfinder: Härer, Samuel, 74354 Besigheim (DE); Feucht, Thomas, 74336 Brackenheim (DE); Schnittker, Frank Clemens, 49401 Damme (DE); Korte, René, 74613 Öhringen (DE)
(74) Vertreter: DREISS Patentanwälte PartG mbB

(57) **Zusammenfassung**

Die Erfindung betrifft eine Ausgleichsvorrichtung (10) für eine Automatisierungsanlage, insbesondere zur Anordnung zwischen einer Handhabungsvorrichtung und einem Werkzeug, die Ausgleichsvorrichtung (10) umfassend: eine erste Ausgleichseinheit (12) mit einem ersten Grundteil (18) und mit einem ersten Ausgleichsteil (20), wobei das erste Ausgleichsteil (20) relativ zum ersten Grundteil (18) zwischen einer ersten Grundposition und einer ersten Ausgleichsposition bewegbar angeordnet ist, wenigstens eine zweite Ausgleichseinheit (14) mit einem zweiten Grundteil (26) und mit einem zweiten Ausgleichsteil (28), wobei das zweite Ausgleichsteil (28) relativ zum zweiten Grundteil (26) zwischen einer zweiten Grundposition und einer zweiten Ausgleichsposition bewegbar angeordnet ist, wenigstens eine Verriegelungseinheit (54, 64) zum Verriegeln des zweiten Ausgleichsteils (28) in der zweiten Grundposition mit einem in einem Verriegelungsgehäuse (56, 66) zwischen einer Freigabeposition und einer Verriegelungsposition verlagerbaren Verriegelungselement (60, 70), wobei das erste Grundteil (18) oder das erste Ausgleichsteil (20) im Verriegelungsgehäuse (56, 66) integriert ausgebildet ist.

## Beschreibung

Die Erfindung betrifft eine Ausgleichsvorrichtung sowie ein System aus Handhabungsvorrichtung und Ausgleichsvorrichtung.

Aus der DE 10 2023 112 875 B3 ist eine Ausgleichsvorrichtung zum Ausgleich entlang einer x-Achse und einer y-Achse bekannt. Zum Ausgleich entlang einer z-Achse kann zusätzlich eine weitere Ausgleichsvorrichtung angebaut werden.

Es ist dabei nachteilig, dass zum einen das Gewicht für die Ausgleichsvorrichtungen mit zusätzlichen Ausgleichsrichtungen steigt und zum anderen sich der Schwerpunkt der Ausgleichsvorrichtung gegenüber dem Roboterflansch, welcher insbesondere an einer Handhabungsvorrichtung angeordnet sein kann, entfernt. Dies führt zu geringeren zulässigen Aufnahmelasten an der Handhabungsvorrichtung und zu höherem Energieaufwand wie auch höherem Verschleiß an der Handhabungsvorrichtung.

Der Erfindung liegt die Aufgabe zugrunde, eine Ausgleichsvorrichtung mit mehreren Ausgleichsrichtungen bereitzustellen, welche flacher und leichter baut.

Die der Erfindung zugrundeliegende Aufgabe wird gelöst durch eine Ausgleichsvorrichtung mit den Merkmalen des Anspruchs 1. Die Erfindung ist gerichtet auf eine Ausgleichsvorrichtung für eine Automatisierungsanlage, insbesondere zur Anordnung zwischen einer Handhabungsvorrichtung und einem Werkzeug. Die Ausgleichsvorrichtung umfasst eine erste Ausgleichseinheit mit einem ersten Grundteil und mit einem ersten Ausgleichsteil, wobei das erste Ausgleichsteil relativ zum ersten Grundteil zwischen einer ersten Grundposition und einer ersten Ausgleichsposition bewegbar angeordnet is. Die Ausgleichsvorrichtung umfasst ferner wenigstens eine zweite Ausgleichseinheit mit einem zweiten Grundteil und mit einem zweiten Ausgleichsteil, wobei das zweite Ausgleichsteil relativ zum zweiten Grundteil zwischen einer zweiten Grundposition und einer zweiten Ausgleichsposition bewegbar angeordnet ist. Die Ausgleichsvorrichtung umfasst wenigstens eine Verriegelungseinheit zum Verriegeln des ersten und/oder des wenigstens einen zweiten Ausgleichsteils in der zweiten Grundposition mit einem in einem Verriegelungsgehäuse zwischen einer Freigabeposition und einer Verriegelungsposition verlagerbaren Verriegelungselement. Das erste Grundteil ist im Verriegelungsgehäuse und/oder im zweiten Ausgleichsteil integriert ausgebildet ist. Alternativ ist das erste Ausgleichsteil im Verriegelungsgehäuse und/oder im zweiten Grundteil integriert ausgebildet.

In einer bevorzugten Ausführungsform weist die erste Ausgleichseinheit eine erste Verriegelungseinheit zum Verriegeln des ersten Ausgleichsteils und die zweite Ausgleichseinheit eine zweite Verriegelungseinheit zum Verriegeln des zweiten Ausgleichsteils auf. Vorzugsweise ist das erste Grundteil dabei in dem Verriegelungsgehäuse der ersten Verriegelungseinheit integriert ausgebildet. Vorzugsweise ist das erste Ausgleichsteil dabei in dem zweiten Grundteil und dem Verriegelungsgehäuse der zweiten Verriegelungseinheit integriert ausgebildet

Aufgrund des integralen Aufbaus einer der Komponenten der ersten Ausgleichsvorrichtung und des Verriegelungsgehäuses der Verriegelungseinheit bzw. einer weiteren Ausgleichsvorrichtung, insbesondere der Integration des ersten Grundteils innerhalb des ersten Verriegelungsgehäuses und der Integration des ersten Ausgleichsteils im zweiten Grundteil und im zweiten Verriegelungsgehäuse, wird eine flach und leicht bauende Ausgleichsvorrichtung bereitgestellt. Das jeweilige Verriegelungsgehäuse und das jeweilige Grundteil fallen somit in den einzelnen Ausgleichseinheiten zusammen. Damit rückt der geometrische Schwerpunkt der an der Handhabungsvorrichtung angeordneten Last, wie die Ausgleichsvorrichtung, sowie das Werkzeug und das Werkstück, näher an den Roboterflansch heran. Zudem wird die Anzahl der für die Erzeugung der Ausgleichs- und/oder Verriegelungsfunktion zu verwendenden Bauteile reduziert und Gewicht sowie Bauhöhe eingespart.

Es ist vorteilhaft, wenn an einem Roboterflansch einer Handhabungsvorrichtung eine Ausgleichsvorrichtung angeordnet ist. Die Ausgleichsvorrichtung kann eine oder beide der folgenden Komponenten aufweisen: eine horizontale Ausgleichseinheit mit einer horizontalen Verriegelungseinheit, eine vertikale Ausgleichseinheit mit einer vertikalen Verriegelungseinheit. Die Ausgleichsvorrichtung kann alternativ folgende Komponenten aufweisen: eine rotatorische Ausgleichseinheit mit einer rotatorischen Verriegelungseinheit, eine vertikale Ausgleichseinheit mit einer vertikalen Verriegelungseinheit. Die Ausgleichsvorrichtung kann zudem alternativ folgende Komponenten aufweisen: eine horizontale Ausgleichseinheit mit einer horizontalen Verriegelungseinheit, eine rotatorische Ausgleichseinheit mit einer rotatorischen Verriegelungseinheit, eine vertikale Ausgleichseinheit mit einer vertikalen Verriegelungseinheit.

Im Sinne der Erfindung ist für die rotatorische Ausgleichseinheit (W-Winkelausgleich) eine Rotation um eine X-Achse und/oder um eine Y-Achse und/oder um eine Z-Achse gemeint. Die Ausgleichseinheiten und/oder die Verriegelungseinheiten sind vorzugsweise entlang der Z-Achse hintereinander angeordnet. Eine horizontale Ausgleicheinheit stellt vorzugsweise einen Ausgleich entlang der X- und der Y-Achse bereit. Eine vertikale Ausgleichseinheit stellt vorzugsweise einen Ausgleich entlang der Z-Achse bereit.

Die Ausgleichsvorrichtung weist vorzugsweise eine erste Ausgleichseinheit, eine zweite Ausgleichseinheit und eine dritte Ausgleichseinheit auf, welche beliebig austauschbar sind. So kann z.B. die horizontale Ausgleichseinheit die erste Ausgleichseinheit im Sinne des Anspruchs 1 darstellen und die rotatorische Ausgleichseinheit die zweite Ausgleichseinheit im Sinne des Anspruchs 1 darstellen. Alternativ kann z.B. auch die vertikale Ausgleichseinheit die erste Ausgleichseinheit im Sinne des Anspruchs 1 darstellen und die rotatorische Ausgleichseinheit die zweite Ausgleichseinheit im Sinne des Anspruchs 1 darstellen etc.

Ein vorteilhafter Aspekt der Erfindung sieht vor, dass die Verriegelungseinheit pneumatisch und/oder hydraulisch angetrieben ist. Demnach kann besonders einfach das in der Verriegelungseinheit befindende Verriegelungselement betätigt bzw. aktiviert und deaktiviert werden.

Ein vorteilhafter Aspekt der Erfindung sieht vor, dass das Verriegelungsgehäuse einen Zylinderraum begrenzt, und wobei das Verriegelungselement einen im Zylinderraum angeordneten Kolbenabschnitt aufweist. Der Kolbenabschnitt unterteilt den Zylinderraum in einen ersten Druckraum und einen zweiten Druckraum, wobei zumindest einer oder beide zum Antreiben des Kolbenabschnitts und des Verriegelungselements mit Druck beaufschlagbar sind.

Ein vorteilhafter Aspekt der Erfindung sieht vor, dass die erste Ausgleichseinheit erste Federmittel zum Rückführen des ersten Ausgleichsteils in die erste Grundposition aufweist, und wobei die ersten Federmittel an oder in dem Verriegelungsgehäuse angeordnet sind. Demnach wird in einfacher Weise eine Nachgiebigkeit bereitgestellt.

Ein vorteilhafter Aspekt der Erfindung sieht vor, dass die erste Ausgleichseinheit erste Führungsmittel, insbesondere in der Art von Kugelbuchsen, aufweist, und wobei die ersten Führungsmittel im Verriegelungsgehäuse angeordnet sind. Demnach ist eine geführte Bewegung der Federmittel des ersten Ausgleichsteil gewährleistet.

Ein vorteilhafter Aspekt der Erfindung sieht vor, dass das erste Ausgleichsteil relativ zum ersten Grundteil entlang einer z-Achse von der ersten Grundposition in die erste Ausgleichsposition bewegbar angeordnet ist. Damit ist die erste Ausgleichseinheit im Sinne der Erfindung vertikal ausgebildet, um einen vertikalen Ausgleich zu ermöglichen.

Ein vorteilhafter Aspekt der Erfindung sieht vor, dass das wenigstens eine zweite Ausgleichsteil relativ zum wenigstens einen zweiten Grundteil entlang einer senkrecht zur z-Achse verlaufenden x-Achse und entlang einer senkrecht zur x-Achse verlaufenden y-Achse von der zweiten Grundposition in die zweite Ausgleichsposition bewegbar angeordnet ist. Damit ist die zweite Ausgleichseinheit im Sinne der Erfindung horizontal ausgebildet, um einen horizontalen Ausgleich zu ermöglichen.

Ein vorteilhafter Aspekt der Erfindung sieht vor, dass das wenigstens eine zweite Ausgleichsteil relativ zum wenigstens einen zweiten Grundteil rotatorisch um die x-Achse und um die y-Achse von der zweiten Grundposition in die zweite Ausgleichsposition verschwenkbar angeordnet ist. Damit ist die zweite Ausgleichseinheit im Sinne der Erfindung rotatorisch ausgebildet.

Es ist denkbar, dass sowohl eine vertikale Ausgleichseinheit als auch eine horizontale Ausgleichseinheit in einer Ausgleichsvorrichtung vorgesehen sind.

Es ist denkbar, dass sowohl eine vertikale Ausgleichseinheit als auch eine rotatorische Ausgleichseinheit in einer Ausgleichsvorrichtung vorgesehen sind.

Es ist denkbar, dass sowohl eine horizontale Ausgleichseinheit als auch eine rotatorische Ausgleichseinheit in der Ausgleichsvorrichtung vorgesehen sind.

Es ist denkbar, dass eine vertikale Ausgleichseinheit, eine horizontale Ausgleichseinheit sowie eine rotatorische Ausgleichseinheit in einer Ausgleichsvorrichtung vorgesehen sind.

Ein vorteilhafter Aspekt der Erfindung sieht vor, dass das Verriegelungselement innerhalb des Verriegelungsgehäuses der Verrieglungseinheit entlang der z-Achse zwischen der Freigabeposition und der Verriegelungsposition verlagerbar ist. Es ist denkbar, dass eine horizontale, eine rotatorische und/oder eine vertikale Verriegelungseinheit in einer Ausgleichsvorrichtung vorgesehen sind.

Das erste Grundteil der vertikalen Ausgleichseinheit kann integral mit dem Verriegelungsgehäuse der horizontalen Verriegelungseinheit oder mit dem Verriegelungsgehäuse der rotatorische Verriegelungseinheit ausgebildet sein.

Ein vorteilhafter Aspekt der Erfindung sieht vor, dass die erste Ausgleichseinheit und/oder die wenigstens eine zweite Ausgleichseinheit eine Ausgleichssensorvorrichtung zum Erfassen der Position des zugehörigen Ausgleichsteils aufweist. Demnach kann in Echtzeit die Position des jeweiligen Ausgleichsteils erfasst werden. In Abhängigkeit der erfassten Positionsdaten kann die die Ausgleichsvorrichtung tragende Handhabungsvorrichtung entsprechend positioniert werden, sodass ein wiederholgenaues Anfahren der Handhabungsvorrichtung an ein Werkstück auch bei einer Auslenkung der Ausgleichsvorrichtung in eine Ausgleichposition sichergestellt wird.

Ein vorteilhafter Aspekt der Erfindung sieht vor, dass die wenigstens eine Verriegelungseinheit wenigstens eine Verriegelungssensorvorrichtung zum Erfassen der Position des zugehörigen Verriegelungselements aufweist. Demnach kann in Echtzeit der Verriegelungszustand der Verriegelungseinheit und die Bewegbarkeit des mit der Verriegelungseinheit wirksam verbundenen Ausgleichsteils erfasst werden.

Ein vorteilhafter Aspekt der Erfindung sieht vor, dass die Ausgleichssensorvorrichtung und/oder die Verriegelungssensorvorrichtung als inkrementeller Sensor und/oder als induktiver Inductive-Position-Detection-Sensor (IPD-Sensor) und/oder als magnetischer Sensor ausgebildet sind.

Die der Erfindung zugrundeliegende Aufgabe wird ebenfalls gelöst durch ein System mit den Merkmalen des Anspruchs 13. Die Erfindung ist gerichtet auf ein System mit einer Handhabungsvorrichtung und mit einer, insbesondere zuvor beschriebenen, Ausgleichsvorrichtung, wobei die Handhabungsvorrichtung eine Handhabungssteuerung und die Ausgleichsvorrichtung eine in die Handhabungssteuerung integrierte Ausgleichssteuerung aufweist. Die mehreren Ausgleichsvorrichtungen der Ausgleichsvorrichtung weisen jeweils eine Sensorvorrichtung zum Erfassen der Position und/oder des Hubs und/oder des Wegs des zugehörigen Ausgleichsteils auf, wobei die Handhabungssteuerung derart eingerichtet ist, dass diese in Abhängigkeit der erfassten Daten der Sensorvorrichtungen der Ausgleichsvorrichtungen die Handhabungsvorrichtung steuert. Die mehreren Verriegelungseinheiten der Ausgleichsvorrichtung weisen vorzugsweise jeweils eine Sensorvorrichtung zum Erfassen der Position und/oder des Hubs und/oder des Wegs des zugehörigen Verrieglungselements auf, insbesondere wobei die Handhabungssteuerung derart eingerichtet ist, dass diese in Abhängigkeit der erfassten Daten der Sensorvorrichtungen der Verriegelungseinheiten die Handhabungsvorrichtung steuert.

Damit ist eine dynamische Steuerung von miteinander in der Ausgleichsvorrichtung kombinierten Ausgleichseinheiten und Verriegelungseinheiten sichergestellt. Unterschiedliche Positionen verschiedener Werkstücke können mittels der dynamischen Steuerung wiederholungstreu exakt angefahren werden, ohne dass die Handhabungsvorrichtung sich jedes Mal erneut gegenüber dem zu handhabenden Werkstück ausrichten muss. Damit geht eine erhebliche Zeitersparnis beim sequentiellen oder wiederholten Anfahren des der Handhabungsvorrichtung an mehrere Werkstücke einher, insbesondere bei vielen in kurzer Sequenz zu handhabenden, gleichartigen Werkstücken.

Aus dem Stand der Technik bekannte Ausgleichseinheiten oder -vorrichtungen werden individuell mittels einer Pneumatikversorgung betrieben. Die Pneumatikversorgung wird mittels einer Steuerung individuell angesteuert, wodurch für einen vorher festgelegten Ausgleichsfall nur ein einfach gesteuerter Ausgleich in einer spezifischen Richtung erfolgen kann. Bei Kombinationen von mehreren, unterschiedlichen und ggf. sogar gleichzeitig zu aktivierenden Ausgleichsrichtungen können die unterschiedlichen Ausgleichseinheiten nur individuell, aber nicht als Gruppe angesteuert werden. Die Steuerung der einzelnen Ausgleichseinheiten für die jeweilige Anwendung muss auf den Ausgleichsfall hin auf einen bestimmten Ausgleichsbedarf hin vorab "statisch" parametriert werden.

Aus dem Stand der Technik bekannte Steuerungen können somit nur statisch voreingestellte und vorher bekannte Ausgleichsfälle und Ausgleichsbedarfe berücksichtigen. Eine dynamische Flexibilität der Steuerung bei einer Änderung der Anwendung oder des Ausgleichsfalls, z.B. durch Hinzufügen bzw. Entfall einer der Ausgleichsrichtungen ist aus dem Stand der Technik nicht bekannt, sodass die Steuerung für die einzelnen Ausgleichsvorrichtungen komplett neu parametriert werden muss. Die sich tatsächlich ergebenden Ausgleichswege der einzelnen Ausgleichseinheiten können zudem entweder gar nicht oder nur ungenau ermittelt werden.

Eine in der Roboter- oder Handhabungssteuerung integrierte Ausgleichssteuerung kann im Betrieb bei Fehlern, Überlastung oder Ausfall einer der kombinierten Ausgleichseinheiten oder im Fall, dass eine Ausgleichsrichtung nicht erforderlich ist, diese verriegeln, um einen ungewollten Ausgleich in eine ungewünschte Ausgleichsrichtung zu verhindern und um Schäden während des Betriebs vorzubeugen. Die Ausgleichssteuerung kann dabei auf die Sensorvorrichtungen, insbesondere Ausgleichssensorvorrichtungen und/oder Verriegelungssensorvorrichtungen, zurückgreifen, um die erfassten Positionen und Zustände der jeweiligen Ausgleichseinheiten, wie z.B. verriegelt/entriegelt, anhand eines computerimplementierten Verfahrens zu erfassen.

Die Ausgleichssteuerung ist vorzugsweise derart eingerichtet, dass diese mehrere Verriegelungseinheiten sequentiell oder als Gruppe aktiviert, um entweder mindestens eine Ausgleichsrichtung zu sperren oder nur in mindestens einer Ausgleichsrichtung auszugleichen.

Die Ausgleichssteuerung ist vorzugsweise derart eingerichtet, dass diese die jeweilige Verriegelungseinheit selektiv aktiviert, um entweder eine Ausgleichsrichtung zu sperren oder nur in einer Ausgleichsrichtung auszugleichen.

Die Ausgleichssteuerung ist vorzugsweise derart eingerichtet, dass diese in Abhängigkeit eines vorliegenden Ausgleichsfalls selbständig die Ausgleichsrichtung dadurch ermöglicht, indem das Verriegelungselements in die Freigabeposition bewegt wird (Entriegelung der jeweiligen Verriegelungseinheit) und damit die erforderliche Ausgleichsrichtung freigibt.

Die Ausgleichssteuerung ist vorzugsweise derart eingerichtet, dass diese in Abhängigkeit der durch die Sensorvorrichtungen erfassten Daten hinsichtlich des jeweiligen Ausgleichsweges die Ausgleichseinheit beim nächsten Anfahren der Handhabungseinrichtung ansteuert (vorpositioniert). Dabei kann die Position, welche zuvor eine Wegabweichung darstellte, noch präziser und schneller angefahren werden. Als Ausgangspunkt für die Ausgleichssteuerung kann dabei z.B. die Zielposition der Handhabungsvorrichtung mit gegriffenem Werkstück dienen. Beispielsweise lenkt eine horizontale Ausgleichsvorrichtung bei einer ersten Anfahrt dazu in x-Richtung um +1,77 mm und in y-Richtung um -0,31 mm aus. Die Handhabungsvorrichtung trifft damit die Zielposition und das Werkstück kann bearbeitet, insbesondere gefügt, werden. Die Werte in x- und y-Richtung, als die jeweilige Abweichung von der Grundposition, werden von den Sensorvorrichtungen erfasst und der Ausgleichssteuerung zur Verfügung gestellt. Beim nächsten Anfahren der gleichen Zielposition fährt die Handhabungseinrichtung automatisch eine in der x-Richtung um -1,77 mm korrigierte Position und gleichzeitig eine in der y-Richtung um +0,31 mm korrigierte Position an. Dabei kann die Ausgleichsvorrichtung optional in der Referenzlage verriegelt werden und trifft somit bspw. eine anzufahrende Bohrungsposition wiederholungsgenau, so dass ein weiteres Werkstück bspw. positionstreu bspw. gefügt werden kann, ohne dass die Ausgleichsvorrichtung mittels der Ausgleichssteuerung erneut in der x- und/oder in der y-Richtung angesteuert wird.

Die der Erfindung zugrundeliegende Aufgabe wird ebenfalls durch ein computerimplementiertes Verfahren mit den Merkmalen des Anspruchs 14 gelöst. Das Verfahren umfasst die folgenden Schritte:
a) Erfassen einer Ausgleichsbewegung beim Anfahren einer Zielposition mittels Ausgleichssensorvorrichtungen mehrerer Ausgleichseinheiten,
b) Bestimmen eines Ausgleichsversatzes in Abhängigkeit der zuvor erfassten Ausgleichsbewegung,

Beim nochmaligen Anfahren der Zielposition:
c) Anfahren der Zielposition unter Berücksichtigung des bestimmten Ausgleichsversatzes, sodass keine oder eine geringere Ausgleichsbewegung mindestens einer der Ausgleichseinheiten erforderlich ist, und
d) Freigeben der mindestens einen Ausgleichseinheit entlang der ausgeglichenen Ausgleichsrichtungen und Verriegeln der mindestens einen Ausgleichseinheit entlang der nicht ausgeglichenen Ausgleichsrichtungen mittels der zugehörigen Verriegelungseinheiten durch Ansteuerung von Pneumatikanschlüssen in Abhängigkeit des bestimmten Ausgleichsversatzes.

Gemäß Schritt d) werden z.B. Ausgleichsrichtungen gesperrt, welche bereits zuvor keine Ausgleichsbewegung erforderten. So kann ein wiederholgenaues und zeitsparendes Positionieren sichergestellt werden. Ausgleichsrichtungen, in welchen eine Ausgleichsbewegung erforderlich war, werden beim nochmaligen Anfahren freigeschaltet. Dieser Schritt kann z.B. so oft wiederholt werden, bis keine Ausgleichsbewegung mehr erforderlich ist oder die Ausgleichsbewegung einen Schwellwert unterschreitet. Alternativ kann nach einer bestimmten Anzahl an Versuchen die Korrektur unterlassen werden, sodass stets eine Ausgleichsbewegung erfolgt.

Die unterschiedlichen Sensoren sind in das jeweilige Gehäuse der Ausgleichseinheiten integriert und darin befestigt. IPD-Sensoren sind dabei auf integrierte Schaltnocken gerichtet, die derart in das Gehäuse oder am Gehäuse angebracht sind, dass sich bei jeder Ausgleichsbewegung der Abstand zum Sensor verändert, so dass sich das Signal, das vom Sensor ausgegeben wird, verändert. Als Signalart ist entweder ein analoges oder ein digitales Signal am Sensorausgang möglich. Damit erhält die Ausgleichssteuerung sowohl das zuvor anstehende Signal (Verriegelungseinheit aktiv/nicht aktiv) als auch das jeweils anstehende Ausgleichswegsignal, um anhand des computerimplementierten Verfahrens die tatsächliche Ausgleichsrichtung der jeweiligen Ausgleichsvorrichtung zu ermitteln. Dadurch können in der Ausgleichssteuerung auf mehrfache Weise Informationen über die Position und den Zustand der jeweiligen Ausgleichsvorrichtung genutzt werden.

Diese Informationen können in der Ausgleichssteuerung einerseits dazu genutzt werden, einzelne Ausgleichsrichtungen in Echtzeit zu aktivieren bzw. zu deaktivieren, als auch andererseits einen während des Betriebs des Roboters oder der Handhabungsvorrichtung ermittelten Ausgleichsversatz mittels einer Positionskorrektur in Echtzeit mittels des computerimplementierten Verfahrens (auf Basis der ermittelten Ausgleichsweginformation) auszugleichen.

Die Daten des Werkstücks und die Daten der jeweils zum Einsatz kommenden Ausgleichseinrichtungen können von der Ausgleichssteuerung aus einer Datenbank abgerufen werden. Die dem Ausgleichsfall und der Ausgleichswirkung entsprechenden Ausgleichsrichtungen sowie die Ausgleichswege der einzelnen Ausgleichseinheiten werden in einer bevorzugten Ausführungsform mittels Sensoren und der Ausgleichssteuerung anhand eines computerimplementierten Verfahrens ermittelt. Es ist denkbar, in einer weiterhin Ausführungsform innerhalb des computerimplementierten Verfahrens Daten zu nutzen, welche KI-verifizierte Erfahrungswerte für die jeweils erwünschte Ausgleichswirkung darstellen und/oder mittels einer KI mögliche Ausgleichswirkungen einer Ausgleichsvorrichtung vorherzubestimmen. Diese können in einer Anwendungsdatenbank für zukünftige Anwendungen oder zwecks Optimierung bestehender Ausgleichswirkungen vorgehalten werden und weiteren Ausgleichssteuerungen in Echtzeit zur Verfügung gestellt werden.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1: eine perspektivische Ansicht einer Ausgleichsvorrichtung mit einer horizontalen, einer vertikalen und einer rotatorischen Ausgleichseinheit;
- Fig. 2: eine Explosionsansicht der Ausgleichsvorrichtung gemäß Fig. 1;
- Fig. 3: eine erste Schnittansicht der Ausgleichsvorrichtung gemäß Fig. 1;
- Fig. 4: eine zweite Schnittansicht der Ausgleichsvorrichtung gemäß Fig. 1;
- Fig. 5: eine Schnittansicht der Explosionsansicht gemäß Fig. 2;
- Fig. 6: eine Schnittansicht einer aus dem Stand der Technik bekannten vertikalen Ausgleichseinheit;
- Fig. 7: eine perspektivische Ansicht einer Ausgleichsvorrichtung mit einer horizontalen und einer vertikalen Ausgleichseinheit;
- Fig. 8: eine erste Schnittansicht der Ausgleichsvorrichtung gemäß Fig. 7;
- Fig. 9: eine zweite Schnittansicht der Ausgleichsvorrichtung gemäß Fig. 7;
- Fig. 10: eine Schnittansicht durch einen Baukasten von modularen Ausgleichseinheiten zum Zusammenbau einer Ausgleichsvorrichtung; und
- Fig. 11: eine Schnittansicht einer Ausgleichsvorrichtung mit Sensorvorrichtungen.

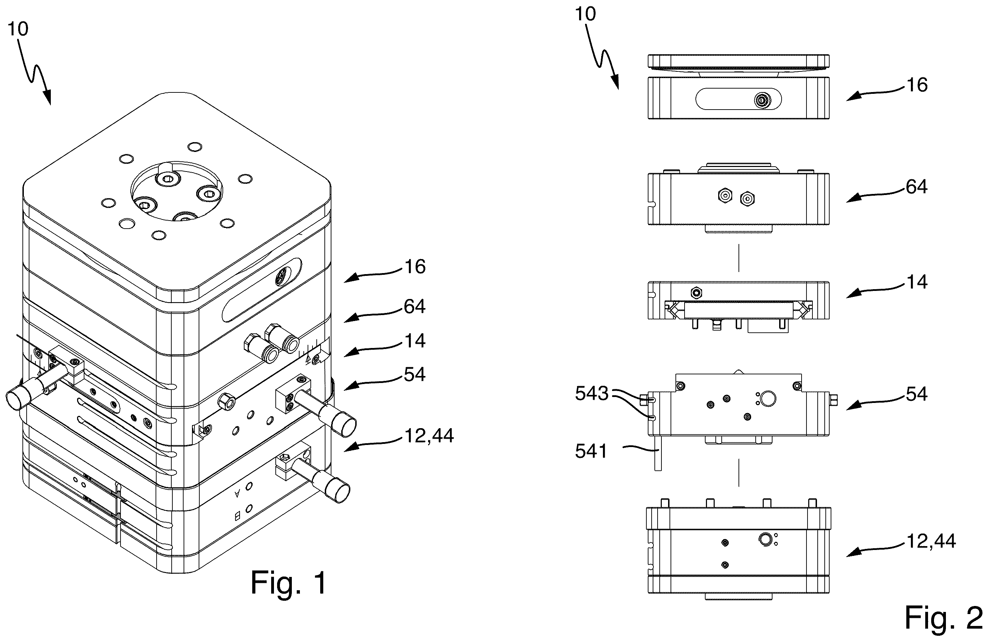

Die Ausgleichsvorrichtung 10 ist zur Anordnung zwischen einer nicht gezeigten Handhabungsvorrichtung, insbesondere einem Roboterarm und dessen Roboterflansch, und einem nicht gezeigten Werkzeug, insbesondere einem Greifer, ausgebildet. Gemäß Fig. 1, 7 und 10 ist die Ausgleichsvorrichtung 10 modular ausgebildet und kann daher in unterschiedlichen Konfigurationen aufgebaut sein.

Gemäß Fig. 1 weist die Ausgleichsvorrichtung 10 eine erste Ausgleichseinheit 12 in Form einer vertikalen Ausgleichseinheit, eine zweite Ausgleichseinheit 14 in Form einer horizontalen Ausgleichseinheit und eine dritte Ausgleichseinheit 16 in Form einer rotatorischen Ausgleichseinheit auf.

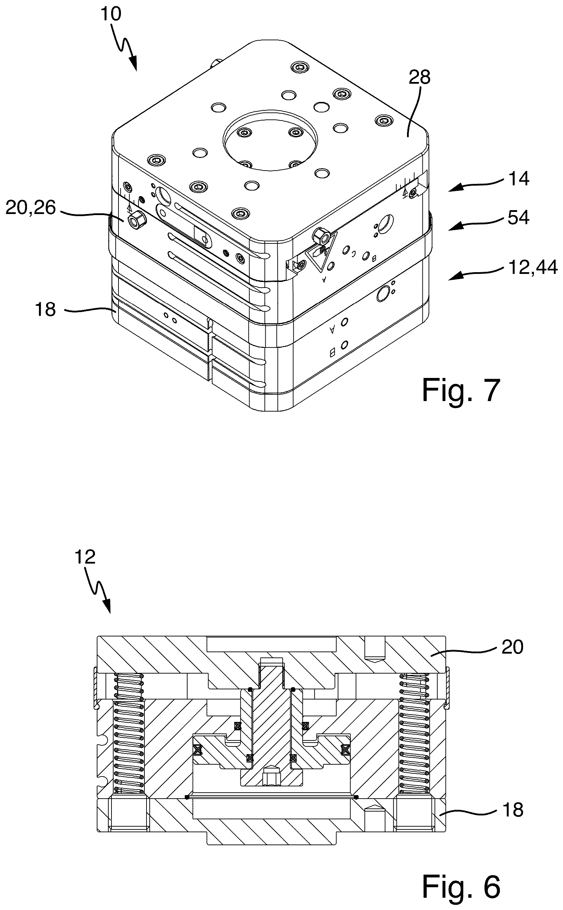

Gemäß Fig. 7 weist die Ausgleichsvorrichtung 10 eine erste Ausgleichseinheit 12 in Form einer vertikalen Ausgleichseinheit und eine zweite Ausgleichseinheit 14 in Form einer horizontalen Ausgleichseinheit auf.

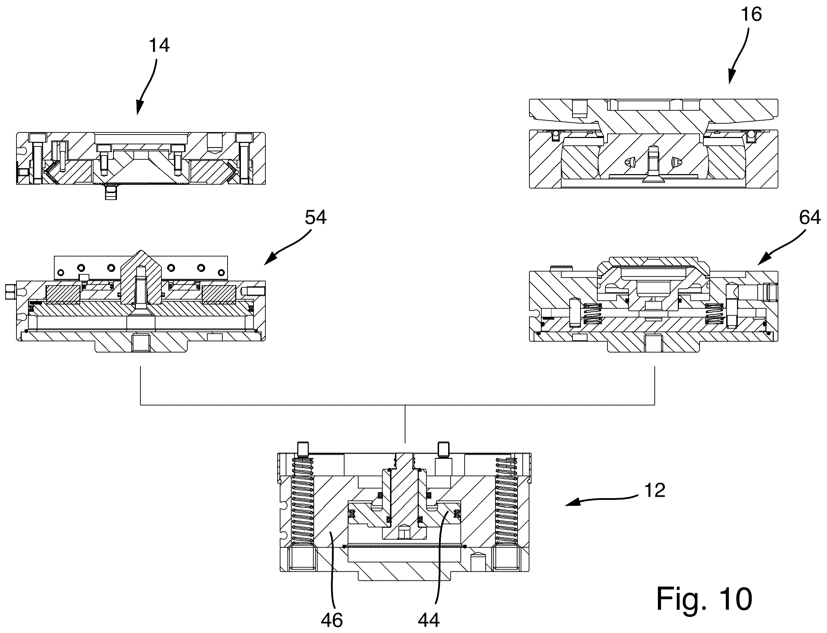

Gemäß Fig. 10 kann die Ausgleichsvorrichtung 10 auch eine erste Ausgleichseinheit 12 in Form einer vertikalen Ausgleichseinheit und eine zweite Ausgleichseinheit 14 in Form einer rotatorischen Ausgleichseinheit aufweisen.

Eine erste Ausgleichseinheit 12 in Form einer vertikalen Ausgleichseinheit weist ein erstes Grundteil 18 und ein erstes Ausgleichsteil 20 auf, wobei das erste Ausgleichsteil 20 relativ zum ersten Grundteil 18 entlang einer z-Achse zwischen einer ersten Grundposition und einer ersten Ausgleichsposition bewegbar angeordnet ist. Vorzugsweise wird das Ausgleichsteil 20 der ersten Ausgleichseinheit 12 an den Roboterflansch der Handhabungsvorrichtung angeordnet. Vorzugsweise wird das Grundteil 18 und das darin integrierte Verriegelungsgehäuse 46 der ersten Ausgleichseinheit 12 an den Werkzeugflansch des Werkzeugs, insbesondere an den Werkzeugflansch eines Greifers angeordnet.

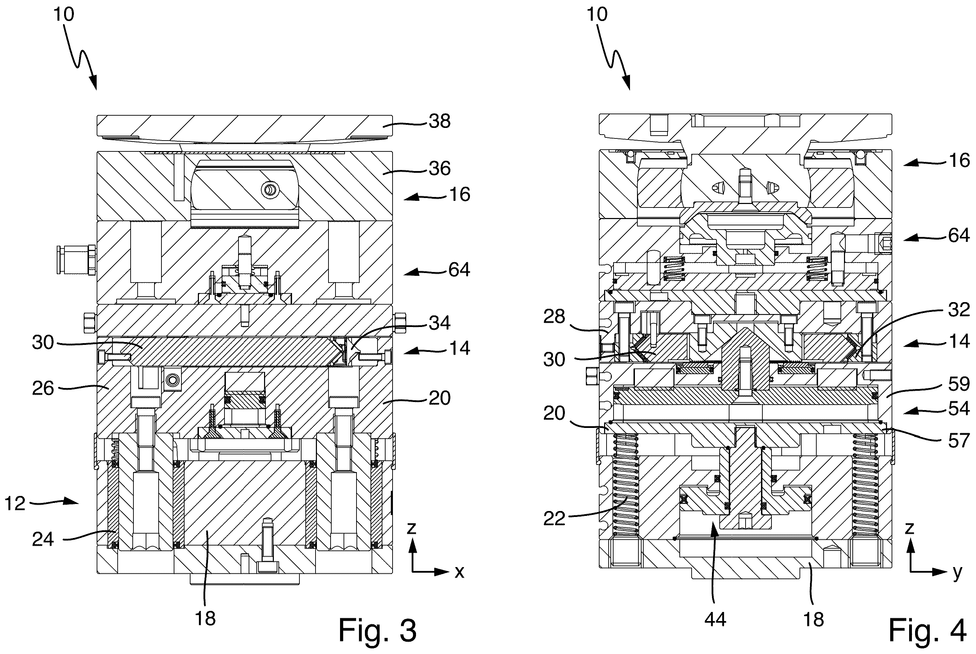

Die erste Ausgleichseinheit 12 weist gemäß Fig. 4 Federmittel 22 auf, sodass die Ausgleichsvorrichtung 10 eine Nachgiebigkeit entlang der z-Achse bereitstellt. Die Federmittel 22 stützen sich einerseits am ersten Grundteil 18 und andererseits am ersten Ausgleichsteil 20 ab. Bei einer Ausgleichsbewegung muss das erste Ausgleichsteil 20 entgegen der Federkraft der Federmittel 22 verlagert werden.

Die erste Ausgleichseinheit 12 weist gemäß Fig. 3 ferner Führungsmittel 24 in der Art von Kugelbuchsen auf, sodass die erste Ausgleichseinheit 12 nicht verkantet und die Federmittel 22 sicher entlang der z-Achse mittels der Führungsmittel 24 geführt werden.

Eine zweite Ausgleichseinheit 14 in Form einer horizontalen Ausgleichseinheit weist ein zweites Grundteil 26 und ein zweites Ausgleichsteil 28 auf, wobei das zwei Ausgleichsteil relativ zum zweiten Grundteil 26 entlang einer x-Achse und entlang einer senkrecht dazu verlaufenden y-Achse zwischen einer zweiten Grundposition und einer zweiten Ausgleichsposition bewegbar angeordnet ist. Wenn keine weitere Ausgleichseinheit vorgesehen ist, findet das zweite Ausgleichteil 28 als Werkzeugflansch zur Anbindung des Werkzeugs Verwendung.

Die zweite Ausgleichseinheit 54 enthält einen Magnetstift 541, für die Aktivierung eines Magnetsensors (nicht dargestellt) der ersten Ausgleichseinheit 12. An dem Magnetstift 541 ist ein Permanentmagnet integriert eingeklebt (nicht dargestellt). Durch die Bewegung des Magnetstifts 541 an einer Nut 543 des zweiten Grundteils 26 vorbei, in die der Magnetsensor eingebracht ist (nicht dargestellt), wird eine Änderung des Magnetfelds des Magnetsensors erzeugt.

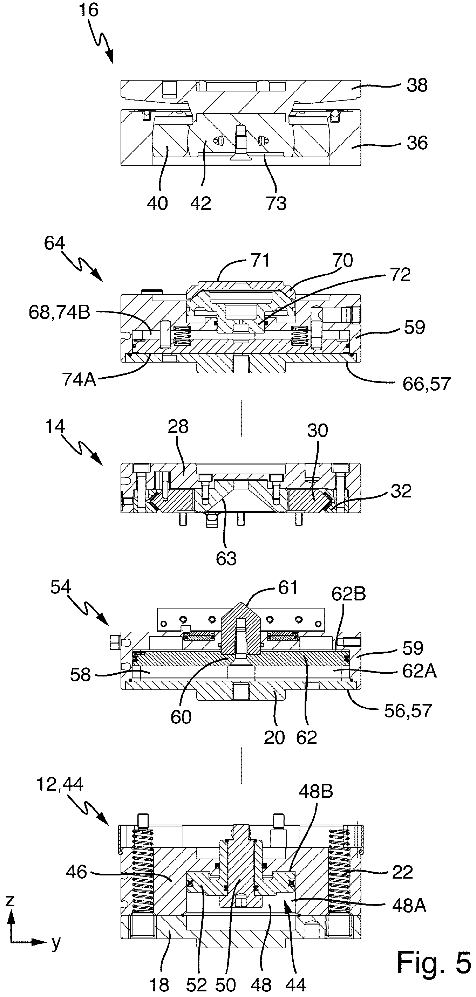

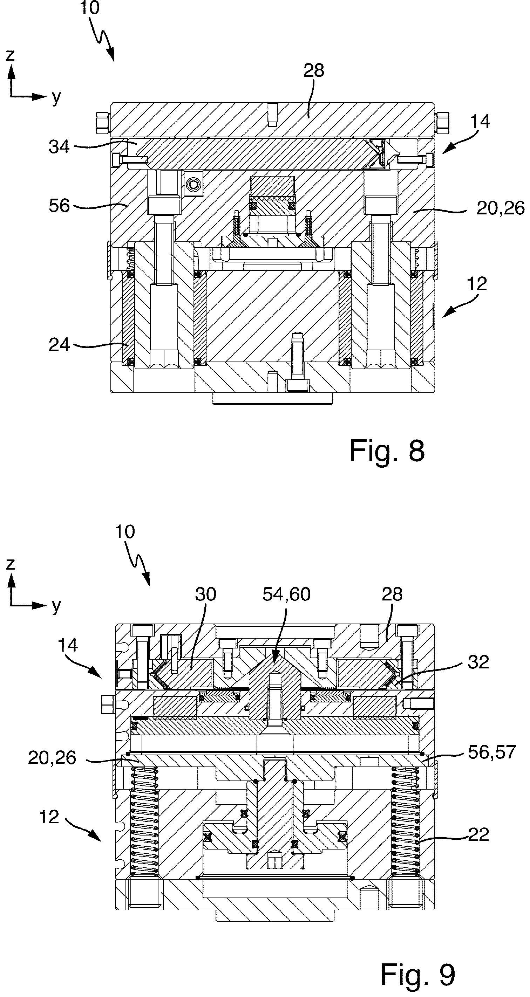

Gemäß Fig. 5, 8 und 9 weist die zweite Ausgleichseinheit 14 entlang der z-Achse zwischen dem zweiten Grundteil 26 und dem zweiten Ausgleichsteil 28 einen Führungsrahmen 30 auf. Im montierten Zustand bilden das zweite Grundteil 26 und das zweite Ausgleichsteil 28 eine im Wesentlichen geschlossene Einheit. Der Führungsrahmen 30 ist gegenüber dem zweiten Grundteil 26 entlang der x-Achse in zwei ersten Linearführungen 32 beweglich angeordnet. Der Führungsrahmen 30 ist gegenüber dem zweiten Grundteil 26 entlang der y-Achse fest angeordnet. Das zweite Ausgleichsteil 28 ist gegenüber dem Führungsrahmen 30 entlang der y-Achse in zwei zweiten Linearführungen 34 beweglich angeordnet. Das zweite Ausgleichsteil 28 ist gegenüber dem Führungsrahmen 30 entlang der x-Achse fest angeordnet. In Summe ist das zweite Ausgleichsteil 28 mittels des Führungsrahmens 30 sowohl entlang der x-Achse, als auch entlang der y-Achse aus der Grundposition in eine Ausgleichsposition verlagerbar.

Eine dritte Ausgleichseinheit 16 in Form einer rotatorischen Ausgleichseinheit weist ein drittes Grundteil 36 und ein drittes Ausgleichsteil 38 auf, wobei das dritte Ausgleichsteils 38 relativ zum dritten Grundteil 36 um die z-Achse zwischen einer dritten Grundposition und einer dritten Ausgleichsposition (rotatorisch) verschwenkbar angeordnet ist. Wenn eine dritte Ausgleichseinheit 16 vorgesehen ist, findet das dritte Ausgleichteil 38 als Werkzeugflansch zur Anbindung des Werkzeugs Verwendung.

Gemäß Fig. 3 bis 5 und 10 weist die dritte Ausgleichseinheit 16 einen im dritten Grundteil 36 angeordneten Lagerrahmen 40 und Lagerkern 42 auf. Der Lagerrahmen 40 ist im dritten Grundteil 36 um die x-Achse drehbar gelagert. Der Lagerkern 42 ist im Lagerrahmen 40 um die y-Achse drehbar gelagert. Der Lagerrahmen 40 und der Lagerkern 42 bilden vorzugsweise ein kardanisches Gelenk. Der Lagerkern 42 ist bewegungsfest, insbesondere einteilig, mit dem dritten Ausgleichsteil 38 ausgebildet. In Summe ist das dritte Ausgleichsteil 38 mittels des Lagerrahmens 40 und des Lagerkerns 42 sowohl um die x-Achse, als auch um die y-Achse aus der dritten Grundposition in die Ausgleichsposition drehbar (rotatorisch) verlagerbar.

Die Ausgleichsbewegung der Ausgleichsvorrichtung 10 ergibt sich aus der Summe der Ausgleichsbewegungen der einzelnen Ausgleichseinheiten 12, 14, 16.

Zur Rückstellung des jeweiligen Ausgleichsteils 10, 24, 28 von der Ausgleichsposition in die Grundposition und/oder zur Verriegelung des jeweiligen Ausgleichsteils 10, 24, 28 in der Grundposition können einzelne oder alle Ausgleichseinheiten 12, 14, 16 Verriegelungseinheiten aufweisen.

Gemäß Fig. 5 weist die erste Ausgleichseinheit 12 eine erste Verriegelungseinheit 44 auf. Die erste Verriegelungseinheit 44 weist ein erstes Verriegelungsgehäuse 46, einen ersten Zylinderraum 48 und ein im ersten Zylinderraum 48 angeordneter erster Zylinderabschnitt 52 des erstes Verriegelungselement 50 auf. Das erste Verriegelungsgehäuse 46 ist vorzugsweise mit dem ersten Grundteil 18 integral ausgebildet. Der erste Zylinderabschnitt 52 unterteilt den ersten Zylinderraum 48 in einen ersten primären Druckraum 48A und einen ersten sekundären Druckraum 48B auf, wobei der primäre Druckraum 48A und/oder der sekundäre Druckraum 48B sind zum Bewegen des ersten Verriegelungselements 50 zwischen einer Freigabeposition und einer Verriegelungsposition entlang der z-Achse mit Druck beaufschlagbar. In der Freigabeposition des ersten Verriegelungselements 50 kann mittels der ersten Ausgleichseinheit 12 eine Ausgleichsbewegung entlang der z-Achse stattfinden. In der Verriegelungsposition des ersten Verriegelungselements 50 kann mittels der ersten Ausgleichseinheit 12 keine Ausgleichsbewegung entlang der z-Achse stattfinden, da das Verriegelungselement 50 mit dem ersten Ausgleichsteil 20 verbunden ist und bei Druckbeaufschlagung des sekundären Druckraums 48B das Verriegelungselement 50 und auch das erste Ausgleichsteil 20 in Richtung des ersten Grundteils 18 bewegt wird.

Gemäß Fig. 5 weist die zweite Ausgleichseinheit 14 eine zweite Verriegelungseinheit 54 auf. Die zweite Verriegelungseinheit 54 weist ein zweites Verriegelungsgehäuse 56, einen zweiten Zylinderraum 58 und ein zweites Verriegelungselement 60 auf. Das zweites Verriegelungselement 60 weist einen im zweiten Zylinderraum 58 angeordneten zweiten Zylinderabschnitt 62 auf, welcher den zweiten Zylinderabschnitt 62 in einen zweiten primären Druckraum 62A und einen zweiten sekundären Druckraum 62B unterteilt. Der zweite primäre Druckraum 62A und/oder der zweite sekundäre Druckraum 62B sind zum Bewegen des zweiten Verriegelungselements 60 zwischen einer Freigabeposition und einer Verriegelungsposition entlang der z-Achse mit Druck beaufschlagbar. In der Freigabeposition des zweiten Verriegelungselements 60 kann mittels der zweiten Ausgleichseinheit 14 eine Ausgleichsbewegung entlang der x-Achse und y-Achse stattfinden. In der Verriegelungsposition des zweiten Verriegelungselements 60 kann mittels der zweiten Ausgleichseinheit 14 keine Ausgleichsbewegung stattfinden, da ein Konus 61 des zweiten Verriegelungselements 60 eine Kegelaufnahme 63 des zweiten Ausgleichsteils 28 kontaktiert und das zweite Ausgleichsteil 28 in die zweite Grundposition verlagert.

Gemäß Fig. 5 weist die dritte Ausgleichseinheit 16 ebenfalls eine dritte Verriegelungseinheit 64 auf. Die dritte Verriegelungseinheit 64 weist ein dritte Verriegelungsgehäuse 66, einen dritten Zylinderraum 68 und ein drittes Verriegelungselement 70 auf. Das dritte Verriegelungselement 70 weist einen im dritten Zylinderraum 68 angeordneten dritten Zylinderabschnitt 72 auf, welcher den dritten Zylinderabschnitt 72 in einen dritten primären Druckraum 74A und einen dritten sekundären Druckraum 74B unterteilt. Der dritte primäre Druckraum 74A und/oder der dritte sekundäre Druckraum 74B sind zum Bewegen des dritten Verriegelungselements 70 zwischen einer Freigabeposition und einer Verriegelungsposition entlang der z-Achse mit Druck beaufschlagbar. In der Freigabeposition des dritten Verriegelungselements 70 kann mittels der dritten Ausgleichseinheit 16 eine Ausgleichsbewegung um die x-Achse und um die y-Achse stattfinden. In der Verriegelungsposition des dritten Verriegelungselements 70 kann mittels der dritten Ausgleichseinheit 16 keine Ausgleichsbewegung stattfinden, da eine Kontaktfläche 71 des dritten Verriegelungselements 70 eine Anlagefläche 73 des dritten Ausgleichsteils 38 kontaktiert und das dritte Ausgleichsteil 38 in die dritte Grundposition verlagert.

Gemäß Fig. 6 ist die erste Ausgleichseinheit 12, wie aus dem Stand der Technik bekannt, als separates Modul ausgebildet und umfasst daher unabhängig von den weiteren Ausgleichseinheiten 14, 16 und unabhängig von den Verriegelungseinheiten 44, 54, 64 ein erstes Grundteil 18 und ein erstes Ausgleichsteil 20. Dies führt dazu, dass die eine derart Ausgleichseinheit nutzende Ausgleichsvorrichtung 10 in Summe schwer ist und hoch baut.

Aus den Fig. 3 bis 5 und 8 bis 11 geht hervor, dass das erste Ausgleichsteil 20 mit einem Verriegelungsgehäuse 56, 66 einer angrenzenden Verriegelungseinheit 54, 64 integral ausgebildet ist. In den Fig. 3 bis 5 ist das erste Ausgleichsteil 20 mit dem zweiten Verriegelungsgehäuse 56 integral ausgebildet, wobei sich die Federmittel 22 am zweiten Verriegelungsgehäuse 56 unmittelbar abstützen und die Führungsmittel 24 innerhalb des zweiten Verriegelungsgehäuses 56 angeordnet sind. In Fig. 10 ist eine alternative Kombination dargestellt (rechts), wobei das erste Ausgleichsteil 20 integral mit dem dritten Verriegelungsgehäuse 66 ausgebildet ist. Demnach baut diese Ausgleichsvorrichtung 10 besonders flach und ist leicht.

Die Verriegelungsgehäuse 56, 66 weisen vorzugsweise jeweils einen Gehäusedeckel 57 auf, welcher handhabungsseitig oder werkzeugseitig den jeweiligen Zylinderraum begrenzt und/oder verschließt. Der Gehäusedeckel 57 wird zum Verschließen des jeweiligen Zylinderraums mit einem Gehäusemantel 59 verbunden, insbesondere verschraubt. Die Federmittel 22 und/oder Führungsmittel 24 schließen vorzugsweise an den Gehäusedeckel 57 an und/oder sind in diesem, zumindest teilweise, angeordnet.

Dieses Prinzip ist alternativ auch auf die weiteren Ausgleichseinheiten anwendbar, wobei z.B. das zweite Ausgleichsteil 28 oder das dritte Ausgleichsteil 38 mit einem benachbarten Verriegelungsgehäuse 46, 56, 66 integral ausgebildet ist. Demnach kann das zweite Ausgleichsteil 28 mit dem ersten Verriegelungsgehäuse 46 oder dem dritten Verriegelungsgehäuse 66 integral ausgebildet sein. Alternativ kann das dritte Ausgleichsteil 38 mit dem ersten Verriegelungsgehäuse 46 oder dem zweiten Verriegelungsgehäuse 56 ausgebildet sein. Ferner ist es auch denkbar, dass das erste Ausgleichsteil 20 mit dem zweiten Grundteil 26 oder dem dritten Grundteil 36 integral ausgebildet ist. Zudem ist es denkbar, dass das zweite Ausgleichsteil 28 mit dem ersten Grundteil 18 oder dem dritten Grundteil 36 und/oder dass das dritte Ausgleichsteil 38 mit dem ersten Grundteil 18 oder dem zweiten Grundteil 26 integral ausgebildet ist.

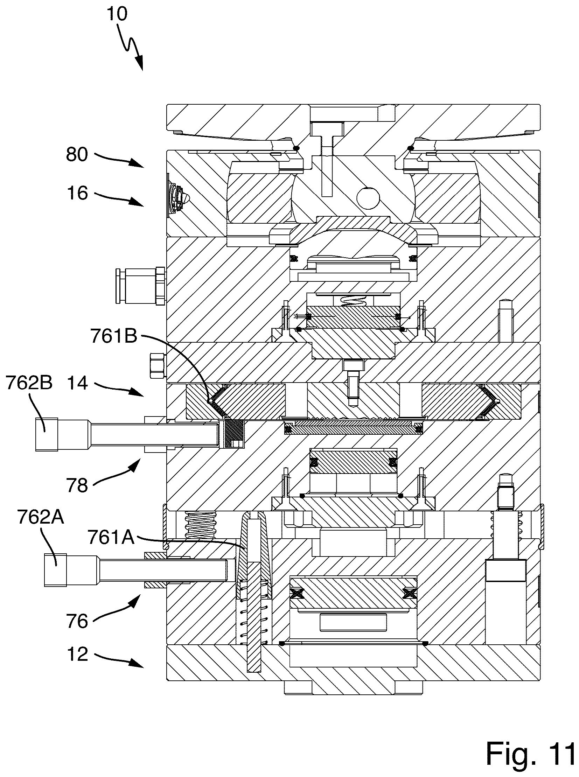

In Fig. 11 ist eine erste Ausgleichssensorvorrichtung 76 der ersten Ausgleichseinheit 12 und eine zweite Ausgleichssensorvorrichtung 78 der zweiten Ausgleichseinheit 14 ersichtlich.

Die erste Ausgleichssensorvorrichtung 76 umfasst einen ersten Signalgeber 761A und einen ersten Signalnehmer 762A, wobei der erste Signalnehmer 762A bei einer Ausgleichsbewegung in die erste Ausgleichsposition relativ zum ersten Signalgeber 761A verlagert wird. Der erste Signalgeber 761A erfasst die Verlagerung und kann daraus auf die Ausgleichsbewegung der ersten Ausgleichseinheit 12 schließen. Aufgrund der Eindimensionalität der ersten Ausgleichseinheit 12 genügt ein einzelnes Sensorpaar.

Die zweite Ausgleichssensorvorrichtung 78 umfasst je Ausgleichsrichtung (x-Achse und y-Achse) einen zweiten Signalgeber 761B und einen zweiten Signalnehmer 762B, wobei der zweite Signalnehmer 762B jeweils bei einer Ausgleichsbewegung in die zweite Ausgleichsposition relativ zum zweiten Signalgeber 761B verlagert wird. Der zweite Signalgeber 761B erfasst die Verlagerung und kann daraus auf die Ausgleichsbewegung der zweiten Ausgleichseinheit 14 schließen. Aufgrund der Zweidimensionalität der Ausgleichsbewegung der zweiten Ausgleichseinheit 12 ist je Ausgleichsrichtung ein Sensorpaar erforderlich.

Die dritte Ausgleichseinheit 16 weist ebenfalls eine dritte Ausgleichssensorvorrichtung 80 auf, wobei diese ebenfalls zwei Sensorpaare zum Erfassen der (rotatorischen) Verdrehung um die x-Achse und die y-Achse umfasst.

Ferner weist vorzugsweise jede Verriegelungseinheit jeweils eine Verriegelungssensorvorrichtung auf, wobei ebenfalls ein Sensorpaar zum Erfassen des Hubs und/oder der Position des Verriegelungselements vorgesehen ist.

Die Ausgleichssensorvorrichtungen und/oder Verriegelungssensorvorrichtungen sind vorzugsweise jeweils am oder im Gehäuse, insbesondere in einer Sensornut, der jeweiligen Komponente angeordnet. Die Sensornut kann z.B. an der Mantelfläche des jeweiligen Gehäuses angeordnet sein.

Die Daten der Sensorvorrichtungen dienen vorzugsweise zur Steuerung der Handhabungsvorrichtung, der Ausgleichseinheiten und/oder der Verriegelungseinheiten. Die Sensordaten werden einer übergeordneten Handhabungssteuerung zur Verfügung gestellt, welche in Abhängigkeit der Sensordaten die Handhabungsvorrichtung, die Ausgleichseinheiten und/oder die Verriegelungseinheiten steuert.

### Bezugszeichenliste

- 10: Ausgleichsvorrichtung
- 12: erste Ausgleichseinheit
- 14: zweite Ausgleichseinheit
- 16: dritte Ausgleichseinheit
- 18: erstes Grundteil
- 20: erstes Ausgleichsteil
- 22: Federmittel
- 24: Führungsmittel
- 26: zweites Grundteil
- 28: zweites Ausgleichsteil
- 30: Führungsrahmen
- 32: erste Linearführung
- 34: zweite Linearführung
- 36: drittes Grundteil
- 38: drittes Ausgleichsteil
- 40: Lagerrahmen
- 42: Lagerkern
- 44: erste Verriegelungseinheit
- 46: erstes Verriegelungsgehäuse
- 48: erster Zylinderraum
- 48A: erster primärer Druckraum
- 48B: erster sekundärer Druckraum
- 50: erstes Verriegelungselement
- 52: erster Zylinderabschnitt
- 54: zweite Verriegelungseinheit
- 541: Magnetstift
- 543: Nut
- 56: zweites Verriegelungsgehäuse
- 57: Gehäusedeckel
- 58: zweiter Zylinderraum
- 59: Gehäusemantel
- 60: zweites Verriegelungselement
- 61: Konus
- 62: zweiter Zylinderabschnitt
- 63: Kegelaufnahme
- 62A: zweiter primärer Druckraum
- 62B: zweiter sekundärer Druckraum
- 64: dritte Verriegelungseinheit
- 66: drittes Verriegelungsgehäuse
- 68: dritter Zylinderraum
- 70: drittes Verriegelungselement
- 71: Kontaktfläche
- 72: dritter Zylinderabschnitt
- 73: Anlagefläche
- 74A: dritter primärer Druckraum
- 74B: dritter sekundärer Druckraum
- 76: erste Ausgleichssensorvorrichtung
- 761: Signalnehmer
- 762: Signalgeber
- 78: zweite Ausgleichssensorvorrichtung
- 80: dritte Ausgleichssensorvorrichtung

## Patentansprüche

1. Ausgleichsvorrichtung (10) für eine Automatisierungsanlage, insbesondere zur Anordnung zwischen einer Handhabungsvorrichtung und einem Werkzeug, die Ausgleichsvorrichtung (10) umfassend:
- eine erste Ausgleichseinheit (12) mit einem ersten Grundteil (18) und mit einem ersten Ausgleichsteil (20), wobei das erste Ausgleichsteil (20) relativ zum ersten Grundteil (18) zwischen einer ersten Grundposition und einer ersten Ausgleichsposition bewegbar angeordnet ist,
- wenigstens eine zweite Ausgleichseinheit (14, 16) mit einem zweiten Grundteil (26, 36) und mit einem zweiten Ausgleichsteil (28, 38), wobei das zweite Ausgleichsteil (28, 38) relativ zum zweiten Grundteil (26, 36) zwischen einer zweiten Grundposition und einer zweiten Ausgleichsposition bewegbar angeordnet ist,
- wenigstens eine Verriegelungseinheit (54, 64) zum Verriegeln des ersten Ausgleichsteils (20) und/oder des wenigstens einen zweiten Ausgleichsteils (28, 38) in der zweiten Grundposition mit einem in einem Verriegelungsgehäuse (56, 66) zwischen einer Freigabeposition und einer Verriegelungsposition verlagerbaren Verriegelungselement (60, 70),
wobei das erste Grundteil (18) im Verriegelungsgehäuse (56, 66) und/oder im zweiten Ausgleichsteil (28, 38) integriert ausgebildet ist oder
wobei das erste Ausgleichsteil (20) im Verriegelungsgehäuse (56, 66) und/oder im zweiten Grundteil (26, 36) integriert ausgebildet ist.

2. Ausgleichsvorrichtung (10) nach Anspruch 1, wobei die Verriegelungseinheit (54, 64) pneumatisch und/oder hydraulisch angetrieben ist.

3. Ausgleichsvorrichtung (10) nach Anspruch 1 oder 2, wobei das Verriegelungsgehäuse (56, 66) einen Zylinderraum (58, 68) begrenzt, und wobei das Verriegelungselement (56, 66) einen im Zylinderraum (58, 68) angeordneten Zylinderabschnitt (62, 72) aufweist.

4. Ausgleichsvorrichtung (10) nach einem der vorherigen Ansprüche, wobei die erste Ausgleichseinheit (12) Federmittel (22) zum Rückführen des ersten Ausgleichsteils (20) in die erste Grundposition aufweist, und wobei die Federmittel (22) am oder im Verriegelungsgehäuse (56, 66) angeordnet sind.

5. Ausgleichsvorrichtung (10) nach einem der vorherigen Ansprüche, wobei die erste Ausgleichseinheit (12) Führungsmittel (24) aufweist, und wobei die Führungsmittel (24) am oder im Verriegelungsgehäuse (56, 66) angeordnet sind.

6. Ausgleichsvorrichtung (10) nach einem der vorherigen Ansprüche, wobei das erste Ausgleichsteil (20) relativ zum ersten Grundteil (18) entlang einer z-Achse von der ersten Grundposition in die erste Ausgleichsposition bewegbar angeordnet ist.

7. Ausgleichsvorrichtung (10) nach einem der vorherigen Ansprüche, wobei das wenigstens eine zweite Ausgleichsteil (28) relativ zum wenigstens einen zweiten Grundteil (26) entlang einer senkrecht zur z-Achse verlaufenden x-Achse und entlang einer senkrecht zur x-Achse verlaufenden y-Achse von der zweiten Grundposition in die zweite Ausgleichsposition bewegbar angeordnet ist.

8. Ausgleichsvorrichtung (10) nach einem der vorherigen Ansprüche, wobei das wenigstens eine zweite Ausgleichsteil (28) relativ zum wenigstens einen zweiten Grundteil (26) um die x-Achse und um die y-Achse von der zweiten Grundposition in die zweite Ausgleichsposition verschwenkbar angeordnet ist.

9. Ausgleichsvorrichtung (10) nach einem der vorherigen Ansprüche, wobei das Verriegelungselement (60, 70) entlang der z-Achse zwischen der Freigabeposition und der Verriegelungsposition verlagerbar ist.

10. Ausgleichsvorrichtung (10) nach einem der vorherigen Ansprüche, wobei die erste Ausgleichseinheit (12) und/oder die wenigstens eine zweite Ausgleichseinheit (14) eine Ausgleichssensorvorrichtung (76, 78, 80) zum Erfassen der Position des zugehörigen Ausgleichsteils (20, 28, 38) aufweist.

11. Ausgleichsvorrichtung (10) nach einem der vorherigen Ansprüche, wobei die wenigstens eine Verriegelungseinheit (44, 54, 64) wenigstens eine Verriegelungssensorvorrichtung zum Erfassen der Position des zugehörigen Verriegelungselements (50, 60, 70) aufweist.

12. Ausgleichsvorrichtung (10) nach Anspruch 10 oder 11, wobei die Ausgleichssensorvorrichtung (76, 78, 80) und/oder die Verriegelungssensorvorrichtung als IN-Sensor und/oder als IPD-Sensor und/oder als MMS-Sensor ausgebildet ist.

13. System mit einer Handhabungsvorrichtung und mit einer Ausgleichsvorrichtung (10), insbesondere nach einem der vorherigen Ansprüche, wobei die Handhabungsvorrichtung eine Handhabungssteuerung aufweist, wobei die Ausgleichsvorrichtung (10) eine in die Handhabungssteuerung integrierte Ausgleichssteuerung aufweist, wobei die mehreren Ausgleichseinheiten (12, 14, 16) der Ausgleichsvorrichtung (10) jeweils eine Ausgleichssensorvorrichtung (76, 78, 80) zum Erfassen der Position und/oder des Hubs und/oder des Wegs des zugehörigen Ausgleichsteils (20, 28, 38) aufweist, und wobei die Handhabungssteuerung derart eingerichtet ist, dass diese in Abhängigkeit der erfassten Sensordaten der Ausgleichssensorvorrichtung (76, 78, 80) der Ausgleichseinheiten (12, 14, 16) die Handhabungsvorrichtung steuert.

14. Computerimplementiertes Verfahren zum Steuern einer Handhabungsvorrichtung mit einer Ausgleichsvorrichtung (10), insbesondere nach den Merkmalen 1 bis 12, das Verfahren umfassend die folgenden Schritte:
a) Erfassen einer Ausgleichsbewegung beim Anfahren einer Zielposition mittels Ausgleichssensorvorrichtungen (76, 78, 80) mehrerer Ausgleichseinheiten (12, 14, 16),
b) Bestimmen eines Ausgleichsversatzes in Abhängigkeit der zuvor erfassten Ausgleichsbewegung,
Beim nochmaligen Anfahren der Zielposition:
c) Anfahren der Zielposition unter Berücksichtigung des bestimmten Ausgleichsversatzes, sodass keine oder eine geringere Ausgleichsbewegung der Ausgleichsvorrichtung (10) erforderlich ist, und
d) Freigeben der Ausgleichseinheiten (12, 14, 16) entlang der ausgeglichenen Ausgleichsrichtungen und Verriegeln der Ausgleichseinheiten (12, 14, 16) entlang der nicht ausgeglichenen Ausgleichsrichtungen mittels der zugehörigen Verriegelungseinheiten (44, 54, 64) in Abhängigkeit des bestimmten Ausgleichsversatzes.
